(19) Europäisches Patentamt
European Patent Office
Office européen des brevets

(11) Veröffentlichungsnummer: **0 199 194 B1**

(12) **EUROPÄISCHE PATENTSCHRIFT**

(45) Veröffentlichungstag der Patentschrift: **13.03.91**

(51) Int. Cl.5: **C08G 18/32**, C08K 5/13, D01F 6/70, C08L 75/04, //(C08L75/04,75:12)

(21) Anmeldenummer: **86104878.3**

(22) Anmeldetag: **09.04.86**

(54) **Elasthanfäden, ihre Herstellung und dazu erforderliche Zwischenprodukte.**

(30) Priorität: **19.04.85 DE 3514187**
**23.11.85 DE 3541407**

(43) Veröffentlichungstag der Anmeldung:
**29.10.86 Patentblatt 86/44**

(45) Bekanntmachung des Hinweises auf die Patenterteilung:
**13.03.91 Patentblatt 91/11**

(84) Benannte Vertragsstaaten:
**DE FR GB IT NL**

(56) Entgegenhaltungen:
**DE-A- 1 918 066**
**US-A- 3 428 711**
**US-A- 3 875 246**
**DE-A- 3 420 308**
**US-A- 3 779 990**
**US-A- 3 998 863**

(73) Patentinhaber: **BAYER AG**
**W-5090 Leverkusen 1 Bayerwerk(DE)**

(72) Erfinder: **Kausch, Michael, Dr.**
**Semmelweisstrasse 151**
**W-5000 Köln 80(DE)**
Erfinder: **Schröer, Hans, Dr.**
**An der Windmühle 3**
**W-4047 Dormagen 1(DE)**
Erfinder: **Wolf, Karl-Heinz, Dr.**
**Pfr.-Maybaum-Weg 6**
**W-5000 Köln 80(DE)**
Erfinder: **Gall, Heinz, Dr.**
**Rurstrasse 30**
**W-5024 Pulheim 4(DE)**
Erfinder: **Süling, Carlhans, Dr.**
**Carl-Leverkus-Strasse 10**
**W-5068 Odenthal(DE)**
Erfinder: **Dauscher, Rudi, Dr.**
**Pommernallee 39**
**W-4047 Dormagen(DE)**

**EP 0 199 194 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Elasthanfasern und -fäden, ein Verfahren zu ihrer Herstellung und dazu vorzugsweise verwendete Komponenten oder Zwischenprodukte.

Unter Elasthanfäden werden Fäden verstanden, die zu mindestens 85 Gew.-% aus segmentierten Polyurethanen bestehen. Die elastischen und mechanischen Eigenschaften werden dadurch erreicht, daß Polyharnstoffpolyurethane aus aromatischen Diisocyanaten verwendet werden. Derartige Elasthane werden durch Verspinnen von Lösungen nach dem Naßspinn- oder bevorzugt nach dem Trockenspinnverfahren hergestellt. Als Lösungsmittel eignen sich polare Lösungsmittel, z.B. Dimethylsulfoxid, N-Methylpyrrolidon und bevorzugt Dimethylformamid oder Dimethylacetamid.

Elasthane müssen gegen Licht und Schadgas stabilisiert werden und enthalten aus diesem Grund Stabilisatoren, die entweder der Spinnlösung als Additiv zugesetzt oder in das segmentierte Polyurethan eingebaut werden. Werden Additive eingesetzt, so sollen diese unter den Spinnbedingungen nicht flüchtig sein.

Wird ein Spinnverfahren zur Elasthanherstellung verwendet, bei dem als Spinngas Luft eingesetzt wird, ist die bei den relativ hohen Spinntemperaturen auftretende oxidative Wirkung des Spinngases bei der Auswahl der Stabilisatorkomponenten zu berücksichtigen. Üblicherweise werden beim Spinnprozeß Spinngas-Temperaturen von 200 bis 400$^{\circ}$ C erreicht.

Es ist bekannt, polymere Amine gemäß DE-OS 1 669 511 oder DE-AS 1 126 603 als Stabilisatoren für segmentierte Polyurethane zu verwenden. Die Stabilitäten dieser Polyharnstoffpolyurethane genügen nicht den heutigen technischen Anforderungen, denn einerseits wird von den verwendeten stabilisierenden Verbindungen gefordert, daß die mechanischen und elastischen Eigenschaften nicht negativ beeinflußt werden, andererseits dürfen alle Verarbeitungsschritte von der Fadenherstellung bis zum Fertigartikel wie Miederwaren oder Badebekleidung die Wirksamkeit der verwendeten Stabilisatorsysteme nicht mindern.

Weiterhin ist aus DE-AS 1 918 066 bekannt, ein nichtsegmentiertes Polyurethan mit tert.-Butylaminogruppen in der Polymerkette als Stabilisator zu verwenden. Auch diese Stabilisierung liefert nicht die erforderlichen Ergebnisse und auch eine Kombination mit phenolischen Stabilisatoren, wie Tetrakis-[3-(3,5-di-tertiär-butyl-4-hydroxyphenyl)-propionyloxymethyl]-methan liefert keine ausreichende Stabilisierung.

Es wurde nun gefunden, daß man ausgezeichnet stabilisierte Elasthanfäden aus Polyharnstoffpolyurethanen herstellen kann, wenn wenigstens eine Komponente des zu verspinnenden Systems tertiäre Aminogruppen enthält und als Antioxidationsmittel solche Phenole verwendet werden, die keine farbigen Nitroverbindungen bilden.

Die Entscheidung, ob farbige Nitroverbindungen gebildet werden, wird mit dem Schadgastest nach ISO 105/G02 getroffen.

Die erfindungsgemäße Kombination von stabilisierend wirkenden Verbindungen kann während der Synthese oder nach Abschluß der Synthese der Polyharnstoffpolyurethanlösung zugesetzt werden. Eine besondere Ausführungsform der Rohstoffsynthese und der erfindungsgemäßen Stabilisierung besteht darin, Hydroxylgruppen enthaltende tert. Amine, z.B. Bis-2-hydroxypropylmethylamin zur Herstellung des Prepolymers als zusätzliche Diolkomponente zu verwenden.

Eine andere bevorzugte Ausführungsform ist der Zusatz eines Polyurethans aus einem aliphatischen Diisocyanat, insbesondere Dicyclohexylmethandiisocyanat, und tertiären Amindiolen zur Spinnlösung. Geeignete Amine sind weiter unten genannt.

Unter den erfindungsgemäß zu verwendenden Phenolen sind solche zu verstehen, die mit den Stickoxiden der Luft keine Nitroverbindungen bilden.

Die erfindungsgemäs eingesetzten Phenole entsprechen der Formel

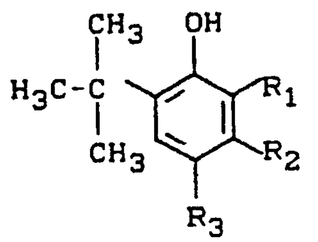

worin

$R_1$ $C_1$-$C_6$-Alkyl,

$R_2$ und $R_3$ unabhängig voneinander $C_1$-$C_6$-Alkyl oder

$-(CH_2)_n-X$,
n eine ganze Zahl 1 oder 2 und
X einen ein- oder mehrwertigen Acylrest
bedeuten.

Als Acylreste kommen die Reste beliebiger organischer Säuren in Frage, beispielsweise Acetyl, Benzoyl, Furoyl, Isophthalyl oder der Isocyanuratrest.

Die Herstellung der Polyharnstoff-Polyurethane erfolgt nach bekannten Verfahrensweisen. Besonders bewährt hat sich der synthetische Aufbau der Faserrohstoffe nach dem Prepolymerverfahren, wobei in der 1. Verfahrensstufe ein langkettiges Diol im Lösungsmittel oder in der Schmelze mit einem Diisocyanat zu einem Prepolymer so umgesetzt wird, daß das Reaktionsprodukt Isocyanatendgruppen enthält.

Als Diole sind einerseits Polyesterdiole und andererseits Polyetherdiole bevorzugt. Weiterhin kommen Mischungen aus Polyester- und Polyetherdiolen in Frage. Die Diole haben im allgemeinen ein Molekulargewicht von 1000 bis 6000.

Als Polyesterdiole sind z.B. Dicarbonsäurepolyester geeignet, die sowohl mehrere Alkohole wie auch mehrere Carbonsäuren enthalten können. Besonders geeignet sind Mischpolyester aus Adipinsäure, Hexandiol und Neopentylglykol im molaren Verhältnis 1:0,7:0,43. Die Polyester haben bevorzugt ein Molekulargewicht von 1000 bis 4000.

Als Polyetherdiole eignen sich z.B. Polytetramethylenoxiddiole, vorzugsweise mit Molekulargewichten von 1000 bis 2000. Besonders bevorzugt sind Mischpolyether, die durch Umsetzung von Polytetramethylenoxiddiolen mit Ethylenoxid erhalten werden.

Es können auch Mischungen von Polyester- oder Polyetherdiolen mit Diolen, die tertiäre Aminogruppen enthalten, eingesetzt werden. Besonders geeignet sind z.B. N-Alkyl-N,N-bis-hydroxyalkylamine. Als Komponenten seien beispielsweise genannt: 4-tert.-Butyl-4-azaheptandiol-2,6, 4-Methyl-4-azaheptandiol-2,6, 3-Ethyl-3-azapentandiol-1,5, 2-Ethyl-2-dimethylaminomethyl-1,3-propandiol, 4-tert-Pentyl-4-azaheptandiol-2,6, 3-Cyclohexyl-3-azapentandiol-1,5, 3-Methyl-3-azapentandiol-1,5, 3-tert.-Butylmethyl-3-azapentandiol-1,5, 3-tert.-Pentyl-3-azapentandiol-1,5.

Bei der Synthese der Elasthanrohstoffe werden die üblichen aromatischen Diisocyanate gegebenenfalls in Abmischung mit geringen Anteilen von aliphatischen Diisocyanaten verwendet. Besonders brauchbare Ergebnisse werden mit den nachstehenden Diisocyanaten erhalten:

2,4-Toluylendiisocyanat sowie entsprechende Isomerengemische, außerdem 4,4'-Diphenylmethandiisocyanat bzw. ent sprechende Isomerengemische. Selbstverständlich ist es möglich, Mischungen von aromatischen Diisocyanaten zu verwenden. Als Mischungskomponenten sind weiterhin die nachstehenden aliphatischen Diisocyanate geeignet:

Hexamethylendiisocyanat, Isophorondiisocyanat und Dicyclohexylmethandiisocyanat. Eine besondere Auführungsform der Erfindung ist die Verwendung von trans-1,4-Cyclohexandiisocyanat als Mischungskomponente.

Eine andere besonders günstige Ausführungsform der Synthese von erfindungsgemäßen Elasthanrohstoffen besteht darin, Polyester- und Polyetherpolyurethanprepolymere zu mischen und anschließend in bekannter Weise zu Polyharnstoffpolyurethanen umzusetzen. Das für den jeweiligen technischen Zweck günstige Mischverhältnis von Polyester-und Polyetherdiolen läßt sich durch Vorversuche einfach ermitteln.

Bei der Polyharnstoffpolyurethansynthese werden die gewünschten Harnstoffgruppen durch eine Kettenverlängerungsreaktion in die Makromoleküle eingeführt. Üblicherweise werden die in der Prepolymerstufe synthetisierten Makro-diisocyanate in Lösung mit Diaminen umgesetzt, z.B. Ethylendiamin, Tetramethylendiamin, 1,3-Cyclohexandiamin, Isophorondiamin sowie Gemischen dieser Diamine. Durch die Verwendung einer geringen Menge an Monoaminen, z.B. Diethylamin oder Dibutylamin, während der Kettenverlängerung kann das gewünschte Molekulargewicht eingestellt werden. Die Kettenverlängerung selbst kann unter Verwendung von $CO_2$ als Retardierungsmittel ausgeführt werden.

Eine Mischung aus Polyester- und Polyetherpolyurethanharnstoffen kann auch nach Abschluß der Elasthan-Synthese noch durchgeführt werden.

Die Phenole werden bevorzugt in einer Menge von 0,1 bis 2 Gew.-%, bezogen auf Polyurethanpolyharnstoff, eingesetzt, die tertiären Amine in einer solchen Menge, daß Elasthane mit 0,02 bis 0,3 Gew.-% tertiärem Stickstoff resultieren. Die Amine für Additive und den Einbau in das zu verspinnende Polymer sind vorzugsweise $C_1$-$C_8$-Alkyl-oder $C_5$-$C_7$-Cycloalkyl-di-$C_2$-$C_3$-alkanolamine.

Beispiel 1

10 kg eines Polytetramethylenetherglykols vom Molekulargewicht 2000 und einer OH-Zahl von 56 wurden mit 3,07 kg Dimethylacetamid verdünnt. In die auf 25 °C temperierte Mischung gab man 2,27 kg Diphenylmethandiisocyanat und ließ bei 50 - 55 °C 60 - 90 Min. lang reagieren, bis der NCO-Gehalt des Prepolymeren einen Wert von 2,65 %, bezogen auf Feststoff, hatte.

220 g Ethylendiamin und 23 g Diethylamin als Kettenabbrecher wurden in 37,2 kg Dimethylacetamid gelöst, in einem Kessel vorgelegt und mit 250 g festem $CO_2$ versetzt, so daß sich eine Carbamatsuspension bildete. Zu dieser Suspension wurden unter starkem Rühren 15,3 kg der Prepolymerlösung zugegeben. Man erhielt eine homogene, klare, farblose Elastomerlösung mit einem Feststoffgehalt von 22 Gew.-% und einer Lösungsviskosität von 70 Pa.s. Die inherente Viskosität des Polymeren betrug 1,2 dl/g (5 g/l Dimethylacetamid bei 30 °C).

Zu der viskosen Polymerlösung wurden, bezogen auf PU-Feststoff, 4 Gew.-% Titandioxid, 1 Gew.-% 1,3,5-Tris-(4-t-butyl-3-hydroxy-2,6-dimethyl-benzyl)-isocyanurat und ein entsprechend Beispiel 2a hergestelltes Polyurethan aus Dicyclohexylmethandiisocyanat und 4-tert.-Pentyl-4-azaheptandiol-2,6 mit der inhärenten Viskosität 0,21 dl/g (25 °C, 5 g/l Dimethylacetamid zugegeben, so daß der Gehalt an tert. Stickstoff 100 mVal/kg Feststoff betrug.

Beispiel 2

A. 3,67 kg 4-Methyl-4-azaheptandiol-2,6, 6,42 kg Dicyclohexylmethandiisocyanat, 6,73 kg Dimethylacetamid und 20 g Dibutylzinndilaurat wurden 3,5 Stunden unter Rühren auf 70 °C erwärmt. Danach war alles eingesetzte Isocyanat umgesetzt. Die Lösung wurde abgekühlt und mit 29 kg Dimethylacetamid auf 22 Gew.-% verdünnt. Man erhielt eine klare, leichtfließende Lösung des basischen Polyurethans mit einer inherenten Viskosität (siehe Beispiel 1) von 0,26.

B. Ein Polyester mit endständigen Hydroxylgruppen und einem mittleren Molekulargewicht von 2000 und einer OH-Zahl von 56 wurde durch Umsetzung von 10 kg Adipinsäure mit 8,1 kg Hexandiol und 7,1 kg Neopentylglykol hergestellt.

C. 10 kg des Polyesters nach B wurden zusammen mit 3,1 kg Dimethylacetamid und 2,3 kg Diphenylmethandiisocyanat 60 Min. auf 50 - 54 °C erwärmt, bis der NCO-Gehalt des Prepolymeren 2,66 %, bezogen auf Feststoff, betrug.

240 g Ethylendiamin wurden in 41,4 kg Dimethylacetamid gelöst, in einem Kessel vorgelegt und mit 260 g festem $CO_2$ versetzt, so daß sich eine Carbamatsuspension bildet. Zu dieser Suspension wurden bei 10 °C unter starkem Rühren 15,35 kg der Polyester-NCO-Prepolymerlösung gegeben. Man erhielt eine homogene, klare Elastomerlösung mit einem Feststoffgehalt von 22 Gew.-% und einer Lösungsviskosität von 98 Pa.s. Zu der viskosen Polymerlösung wurden, bezogen auf PU-Feststoff 4 Gew.-% Titandioxid, 1 Gew.-% 1,3,5-Tris- (4-t-butyl-3-hydroxy-2,6-dimethylbenzyl)-isocyanurat und 2,5 kg der Lösung A gegeben, so daß der Gehalt an tert. Stickstoff 100 mVal/kg Feststoff betrug.

Beispiel 3

Entsprechend Beispiel 1 wurde ein Additiv aus 4-Methyl-4-azaheptandiol-2,6 und Isophorondiisocyanat anstelle des Additivs aus Dicyclohexylmethandiisocyanat und 4-tert.-Pentyl-4-azaheptandiol-2,6 sowie 0,5 Gew.-% der Verbindung der Formel

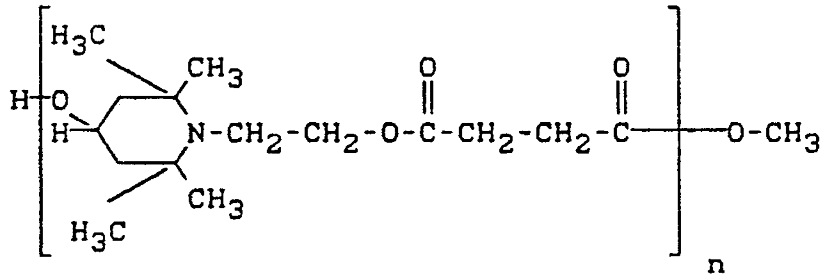

Physikalische Eigenschaften:

| | |
|---|---|
| Aspekt: | farbloses bis leicht gelbliches Pulver |
| Molekulargewicht: | $M_n$ > 3000 |
| Schmelzbereich: | 55 - 70° C |
| Dichte: | 1,18 g/cm³ |

eingesetzt.

Beispiel 4

Entsprechend Beispiel 2 wurden folgende Additive zugesetzt:
4a: aus 3-Methyl-3-azapentandiol-1,5 und Dicyclohexylmethandiisocyanat.
4b: aus 3-Cyclohexyl-3-azapentandiol-1,5 und Dicyclohexylmethandiisocyanat.
4c: aus 4-Tert.-butylmethyl-4-azaheptandiol-2,6 und Dicyclohexylmethandiisocyanat.
4d: aus 3-Tert.-butylmethyl-3-azapentandiol-1,5 und Dicyclohexylmethandiisocyanat.
4e: aus 3-Tert.-pentyl-3-azapentandiol-1,5 und Dicyclohexylmethandiisocyanat.
4f: aus 4-Methyl-4-azaheptandiol-2,6 und Hexamethylendiisocyanat. Zusätzlich enthielt dieses Beispiel 0,5 Gew.-% der Verbindung der Formel gemäß Beispiel 3.

Beispiel 5

10 kg des Polyesters aus Beispiel 2 wurden zusammen mit 190 g 4-Methyl-4-azaheptandiol-2,6, 2,6 kg Diphenylmethandiisocyanat und 3,2 kg Dimethylacetamid unter Rühren 100 Min. auf 50 - 54° C erwärmt, bis der NCO-Gehalt des Prepolymeren 2,66 Gew.-%, bezogen auf Feststoff, betrug. 245 g Ethylendiamin wurden in 43,45 kg Dimethylacetamid gelöst, in einem Kessel vorgelegt und mit 270 g festem $CO_2$ versetzt, so daß sich eine Carbamatsuspension bildete. Zu dieser Suspension wurden unter intensivem Rühren 16 kg der Prepolymerlösung gegeben. Man erhielt eine homogene klare Elastomerlösung mit einem Feststoffgehalt von 22 Gew.-% und einer Lösungsviskosität von 92,6 Pa.s. Zu der viskosen Polymerlösung wurden, bezogen auf PU-Feststoff 4 Gew.-% Titandioxid, 1 Gew.-% 1,3,5-Tris- (4-t-butyl-3-hydroxy-2,6-dimethylbenzyl)-isocyanurat und 0,5 Gew.-% einer Verbindung gemäß Formel in Beispiel 3.

Beispiel 6

Wie in Beispiel 5 beschrieben, wurde eine Lösung eines segmentierten linearen Polyesterpolyharnstoffpolyurethans hergestellt. Zu der erhaltenen Polymerlösung wurden, bezogen auf PU-Feststoff, 4 Gew.-% Titandioxid und 1 Gew.-% Pentaerythrityl-tetrakis-[3-(3-t-butyl-5-6 dimethyl-4-hydroxyphenyl)-propionat] zugesetzt.

Beispiel 7

Beispiel 3 wurde mit dem Polyester gemäß Beispiel 2 anstelle des Polyethers wiederholt.

Beispiel 8

Entsprechend Beispiel 7 mit 3 Gew.-% der Verbindung der Formel gemäß Beispiel 3 und ohne das Additiv aus 4-Methyl-4-azaheptandiol-2,6 und Isophorondiisocyanat.

Beispiel 9

Entsprechend Beispiel 8 mit dem Polyether nach Beispiel 1 anstelle des Polyesters.

Vergleichsbeispiel

Beispiel 6 wurde mit Pentaerythrityl-tetrakis-[3(3,5-di-t-butyl-4-hydroxyphenyl)-propionat] anstelle des Pentaerythrityl-tetrakis-[3-(3-t-butyl-5,6-dimethyl-4-hydroxyphenyl)-propionats wiederholt.

Herstellung der Proben

Die nach den Beispielen hergestellten Lösungen wurden auf herkömmliche Art zu einem multifilen Faden vom Gesamttiter 160 dtex trockenversponnen.

Die Fäden wurden zu einem Strickschlauch verstrickt und nach den folgenden Vorschriften (a) sauer aufgehellt und (b) alkalisch gebleicht und dann einem Prüfverfahren "Schadgasbeständigkeit nach ISO 105/G 02", bzw. einer Lichtechtheitsprüfung nach dem Fade-o-meter-test unterworfen.

Dabei wurden die in den folgenden Tabellen angegebenen Werte erzielt, wobei die Beurteilungsskalen von 1 bis 5 reichen, und 5 jeweils der beste Wert ist.

Durchführung des Schadgastestes

Die Begasung mit Stickoxid nach ISO 105/G 02 wurde durch Verbrennung von Butangas vorgenommen, wobei handelsübliches Campinggas eingesetzt wurde. Die in Höhe der Proben herrschende Temperatur wurde während des gesamten jeweiligen Zyklus mit einem Ni-Cr-Ni-Thermoelement gemessen und von einem Kompensographen aufgezeichnet. Die relative Feuchte im Gerät wurde ebenfalls registriert.

Für die gesamte Prüfungsarbeit zutreffend:

Umdrehung des Umluftrührers 2,5/min

Anzahl der Zyklen je Serie 1 Dauer, Temperaturen und rel. Feuchte der Zyklen:

| Serie | Dauer Std. | Temp. max. °C | Temp. min. °C | rel. Feuchte % |
|---|---|---|---|---|
| A | 19,7 | 64 | 56 | 24 |
| B | 16,1 | 64,5 | 56 | 32 |
| C | 18,9 | 56 | 52 | 36 |

Ein Zyklus war beendet, wenn die mit den Prüflingen in die Apparatur eingebrachte und vorgeschriebene Kontrollfärbung einen definierten Farbumschlag zeigte. Das Campinggas unterscheidet sich vom reinen Butangas durch geringe Zusätze von Propan bzw. durch einen im ppm-Bereich liegenden zugesetzten Odorierungsstoff.

Die jeweilige Farbänderung der begasten Proben zum Ausgangsmaterial wurde mit dem Graumaßstab DIN 54 001 auf der Außenseite bewertet, wobei die Zahl 5 praktisch keiner und die Zahl 1 einer starken Farbänderung entspricht.

Serie A wurde mit den Originalfäden, B mit den sauer aufgehellten Fäden und C mit den alkalisch gebleichten Fäden durchgeführt.

Serien B und C waren erforderlich, da Elasthanfäden zusagen mit Polyamidfäden, die sauer aufgehellt werden, bzw. zusammen mit Baumwollfäden, die alkalisch gebleicht werden, verarbeitet werden.

Die saure Aufhellung wurde in üblicher Weise mit einer Flotte, die 1,8 Gew.-% eines anionischen

Aufhellers enthielt und auf pH 5 eingestellt war, durchgeführt. Die Ware wurde bei 40 °C in die Flotte eingebracht, die Flotte auf 90 °C erhitzt und 60 Minuten bei dieser Temperatur belassen. Die Ware wurde dann entnommen, warm und kalt gespült und bei 70 °C getrocknet.

Die alkalische Bleichung wurde mit einer Flotte, die 6 ml 35 gew.-%iges $H_2O_2$/1 und 1 Gew.-% eines substantiven Aufhellers enthielt bei pH 11 vorgenommen. Die Durchführung war analog der sauren Aufhellung.

## Tabelle I

Schadgasbeständigkeit

| Beispiel | Serie A | B | C |
|---|---|---|---|
| 1 | 3-4 | 3 | 3-4 |
| 2 | 3 | 3 | 3-4 |
| 3 | 2-3 | 3 | 3-4 |
| 4a | 2-3 | 3 | 2-3 |
| 4b | 2 | 3 | 2-3 |
| 4c | 3-4 | 3 | 4 |
| 4d | 3 | 3 | 3-4 |
| 4e | 3 | 3 | 3-4 |
| 4f | 3-4 | 3-4 | 3-4 |
| 5 | 3-4 | 3-4 | 3-4 |
| 6 | 2 | 2 | 2-3 |
| 7 | 3-4 | 3-4 | 3-4 |
| 8 | 3 | 3-4 | 3-4 |
| 9 | 3 | 3-4 | 3 |
| Vergleich | 1 | 1 | 1-2 |

Tabelle II

Lichtechtheit nach 29 Standard Fade-o-meter-stunden

| Beispiel | Serie A | B | C |
|---|---|---|---|
| 1 | 4-5 | 4-5 | 4-5 |
| 2 | 4 | 4 | 4 |
| 3 | 5 | 3 | 4-5 |
| 4a | 4 | 3-4 | 4-5 |
| 4b | 4 | 3-4 | 4-5 |
| 4c | 4 | 4 | 4-5 |
| 4d | 4 | 3-4 | 4 |
| 4e | 4 | 3-4 | 4-5 |
| 4f | 4 | 2-3 | 4 |
| 5 | 3-4 | 4 | 4 |
| 6 | 3-4 | 3-4 | 3-4 |
| 7 | 4 | 2-3 | 4 |
| 8 | 4 | 3 | 4-5 |
| 9 | 4 | 4 | 4 |
| Vergleich | 3 | 3-4 | 4 |

## Ansprüche

1. Verfahren zur Herstellung von mit tert. Aminoverbindungen und phenolischen Antioxidantien stabilisierten Elasthanfäden durch Lösungsspinnen nach üblichem Spinnverfahren von segmentierten Polyharnstoffurethanen auf Basis von Polyesterdiolen oder Polyetherdiolen des Molekulargewichts 1000 bis 6000, aromatischen Diisocyanaten und Diaminen, dadurch gekennzeichnet, daß das zu verspinnende Stystem enthält:

   (A) wenigstens eine Komponente mit tert. Aminogruppen in einer Menge entsprechend 0,02 bis 0,3 Gew.-% tertiärem Stickstoff, bezogen auf Elasthan, wobei (A) entweder das Polyharnstoffurethan ist, bei dessen Synthese ein Diol mit tert. Aminogruppen als zusätzliche Diolkomponente verwendet wurde, oder ein Additiv in Form eines Polyurethans aus einem tert. Aminogruppen tragenden Diol und einem aliphatischem Diisocyanat ist und

   (B) 0,1 - 2 Gew.%, bezogen auf Polyharnstoffurethan, an Phenolen, die keine farbigen Nitroverbindungen bilden und der Formel

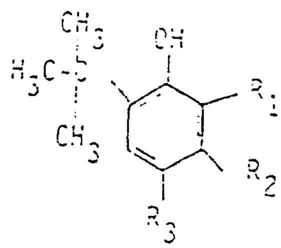

entsprechen, worin
$R_1$ $C_1$-$C_6$-Alkyl,
$R_2$ und $R_3$ unabhängig voneinander $C_1$-$C_6$-Alkyl oder
$-(CH_2)_n-X$,
n eine ganze Zahl 1 oder 2 und X einen ein- oder mehrwertigen Acylrest bedeuten.

**2.** Verfahren nach Anspruch 1, dadurch gekennzeichnet, daß die tert. Aminogruppen enthaltenden Diole N-$C_1$-$C_8$-Alkyl-oder N-$C_5$-$C_7$-Cycloalkyl-di-(C2-C3-alkanol)amine sind.

**3.** Verfahren nach Ansprüchen 1 und 2 dadurch gekennzeichnet daß die tert. Aminogruppen enthaltenden Diolen 4-tert.-Butyl-4-azaheptandiol-2,6, 4-Methyl-4-azaheptandiol-2,6,
3-Ethyl-3-azapentandiol-1,5,
2-Ethyl-2-dimethylaminomethyl-1,3-propandiol,4-tert-Pentyl-4-azaheptandiol-2,6,
3-Cyclohexyl-3-azapentandiol-1,5, 3-Methyl-3-azapentandiol-1,5,
3 tert.-Butylmethyl-3-azapentandiol-1,5, 3-tert.-Pentyl-3-azapentandiol-1,5 sind

**4.** Verfahren nach Ansprüchen 1 bis 3 dadurch gekennzeichnet, daß (A) als Additiv verwendet wird welches aufgebaut ist
aus 3-Methyl-3-azapentandiol-1,5 und Dicyclohexylmethandiisocyanat,
aus 3-Cyclohexyl-3-azapentandiol-1,5 und Dicyclohexylmethandiisocyanat,
aus 4-Tert.-butylmethyl-4-azaheptandiol-2,6 und Dicyclohexylmethandiisocyanat,
aus 3-Tert.-butylmethyl-3-azapentandiol-1,5 und Dicyclohexylmethandiisocyanat,
aus 3-Tert.-pentyl-3-azapentandiol-1,5 und Dicyclohexylmethandiisocyanat oder
aus 4-Methyl-4-azaheptandiol-2,6 und Hexamethylen diisocyanat.

**5.** Verfahren nach Anspruch 1 und 2, dadurch gekennzeichnet, daß (A) in Form von Additiven aus aliphatischen Diisocyanaten, insbesondere Dicyclohexylmethandiisocyanat und N-C1-C9-Alkyl- oder C5-C7-Cycloalkyl-di-(C2-C3-alkanol)aminen, den Spinnlösungen zugesetzt wird und das Phenol (B) das l,3,5-Tris-(4-t-butyl-3-hydroxy-2,6-dimethyl-benzyl) -isocyanurat ist.

**6.** Stabilisierte Elasthanfäden und -Fasern aus einem segmentierten Polyharnstoffurethan auf Basis von Polyester- und/oder Polyetherdiolen, mindestens einem aromatischen Diisocyanat und Diaminen, wobei dieses Polyharnstoffurethan tert.Aminverbindungen und phenolische Stabilisatoren enthält, herstellbar nach einem Verfahren gemäß Ansprüchen 1-5.

## Claims

**1.** A process for the production of elastane filaments stabilized with tert. amino compounds and phenolic antioxidants by conventional solution spinning of segmented polyurea urethanes based on polyester diols or polyether diols having a molecular weight of 1,000 to 6,000, aromatic diisocyanates and diamines, characterized in that the system to be spun contains:
(A) at least one component containing tert. amino groups in a quantity corresponding to 0.02 to 0.3% by weight tertiary nitrogen, based on elastane, (A) being either the polyurea urethane, in the synthesis of which a diol containing tert. amino groups was used as additional diol component, or an additive in the form of a polyurethane of a diol bearing tert. amino groups and an aliphatic diisocyanate and

(B) 0.1 to 2% by weight, based on polyurea urethane, of phenols which do not form coloured nitro compounds and which correspond to the following formula

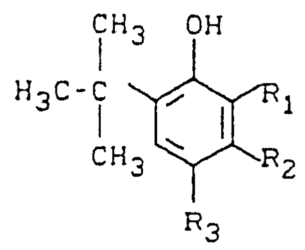

in which

$R_1$: represents $C_{1-6}$ alkyl,
$R_2$ and $R_3$ independently of one another represent $C_{1-6}$ alkyl or $-(CH_2)_n-X$ where
n is a integer of 1 or 2 and
X is a mono- or polyfunctional acyl group.

2. A process as claimed in claim 1, characterized in that the diols containing tert. amino groups are N-$C_{1-8}$-alkyl- or N-$C_{5-7}$-cycloalkyl di-($C_{2-3}$-alkanol)amines.

3. A process as claimed in claims 1 and 2, characterized in that the diols containing tert. amino groups are 4-tert.-butyl-4-azaheptane-2,6-diol, 4-methyl-4-azaheptane-l,6-diol, 3-cyclohexyl-3-azapentane-1,5-diol, 3-methyl-3-azapentane-l,5-diol, 3- tert.-butylmethyl-3-azapentane-1,5-diol, 3-tert.-pentyl-3-azapentane-1,5-diol.

4. A process as claimed in claims 1 to 3, characterized in that (A) is used as an additive synthesized from 3-methyl-3-azapentane-1,5-diol and dicyclohexylmethane diisocyanate,
from 3-cyclohexyl-3-azapentane-1,5-diol and dicyclohexyl methane diisocyanate,
from 4-tert.-butylmethyl-4-azaheptane-2,6-diol and dicyclohexyl methane diisocyanate,
from 3-tert.-butylmethyl-3-azapentane-1,5-diol and dicyclohexyl methane diisocyanate,
from 3-tert.-pentyl-3-azapentane-1,5-diol and dicyclohexyl methane diisocyanate or
from 4-methyl-4-azaheptane-2,6-diol and hexamethylene diisocyanate.

5. A process as claimed in claims 1 and 2, characterized in that (A) is added to the spinning solutions in the form of additives of aliphatic diisocyanates, more particularly dicyclohexyl methane diisocyanate and N-$C_{1-9}$-alkyl or $C_{5-7}$ cycloalkyl di-($C_{2-3}$-alkanol)amines, and the phenol (B) is 1,3,5-tris-(4-t-butyl-3-hydroxy-2,6-dimethylbenzyl)-isocyanurate.

6. Stabilized elastane filaments or fibres of a segmented polyurea urethane based on polyester and/or polyether diols, at least one aromatic diisocyanate and diamines, this polyurea urethane containing tert.-amine compounds and phenolic stabilizers, obtainable by the process claimed in claims 1 to 5.

**Revendications**

1. Procédé de préparation de filaments d'élasthannes stabilisés par des composés aminés tertiaires et des antioxydants phénoliques par filage en solution selon une technique de filage usuelle de polyurée-uréthannes segmentés à base de polyester-diols ou de polyéther-diols de poids moléculaire 1000 à 6000, de diisocyanates aromatiques et de diamines, caractérisé en ce que le mélange à filer contient :
(A) au moins un composant à groupes amino tertiaires en quantité correspondant à 0,02 à 0,3 % en poids d'azote tertiaire par rapport à l'élasthanne, ce composant A consistant soit en le polyurée-uréthanne à la synthèse duquel on a utilisé en tant que composant diol supplémentaire un diol portant des groupes amino tertiaires, soit en un additif, lui-même un polyuréthanne d'un diol portant des groupes amino tertiaires et d'un diisocyanate aliphatique, et

(B) 0,1 à 2 % en poids, par rapport au polyurée-uréthanne, de phénols ne formant pas de dérivés nitrés colorés et répondant à la formule

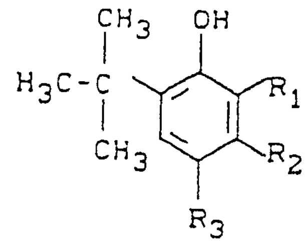

dans laquelle
$R_1$ représente un groupe alkyle en $C_1$-$C_6$,
$R_2$ et $R_3$ représentent chacun, indépendamment l'un de l'autre, un groupe alkyle en $C_1$-$C_6$ ou --$(CH_2)_n$-X
n est égal à 1 ou 2, et
X est un radical acyle mono- ou poly-valent.

**2.** Procédé selon la revendication 1, caractérisé en ce que les diols contenant des groupes amino tertiaires sont des N-(alkyle en $C_1$-$c_8$)- ou N-(cycloalkyle en $C_5$-$C_7$)-di-(alcanol en $C_2$-$C_3$)-amines.

**3.** procédé selon les revendications 1 et 2, caractérisé en ce que les diols contenant des groupes amino tertiaires sont le 4-tert-butyl-4-aza-heptane-diol-2,6, le 4-méthyl-4-aza-heptane-diol-2,6, le 3-éthyl-3-aza-pentane-diol-1,5, le 2-éthyl-2-diméthyl-aminométhyl-1,3-propane-diol, le 4-tert-pentyl-4-aza-heptane-diol-2,6, le 3-cyclohexyl-3-aza-pentane-diol-1,5, le 3-méthyl-3-aza-pentane-diol-1,5, le 3-tert-butylméthyl-3-aza-pentane-diol-1,5, le 3-tert-pentyl-3-aza-pentane-diol-1,5.

**4.** Procédé selon les revendications 1 à 3, caractérisé en ce que l'on utilise en tant qu'additif A un additif formé à partir de :
le 3-méthyl-3-aza-pentane-diol-1,5 et le dicyclohexylméthane-diisocyanate,
le 3-cyclohexyl-3-aza-pentane-diol-1,5 et le dicyclohexylméthane-diisocyanate,
le 4-tert-butylméthyl-4-aza-heptane-diol-2,6 et le dicyclohexyl-méthane-diisocyanate,
le 3-tert-butylméthyl--3-aza-pentane-diol-1,5 et le dicyclohexylméthane-diisocyanate,
le 3-tert-pentyl-3-aza-pentane-diol-1,5 et le dicyclohexylméthane-diisocyanate, ou bien
le 4-méthyl-4-aza-heptane-diol-2,6 et l'hexaméthylène-diisocyanate.

**5.** Procédé selon les revendications 1 et 2, caractérisé en ce que le composant (A) consiste en additifs formés à partir de diisocyanates aliphatiques, en particulier du dicyclohexylméthanediisocyanate, et de N-(alkyle en $C_1$-$C_8$)- ou -(cycloalkyle en $C_5$-$C_7$)-di-(alcanol en $C_2$-$C_3$)-amines, qu'on ajoute aux solutions de filage, et le phénol (B) est l'isocyanurate de 1,3,5-tris-(4-tert-butyl-3-hydroxy-2,6-diméthyl-benzyle)

**6.** Filaments et fibres d'élasthannes stabilisés consistant en un polyurée-uréthanne segmenté à base de polyester- et/ou polyéther-diols, d'au moins un diisocyanate aromatique et de diamines, ce polyurée-uréthanne contenant des composés aminés tertiaires et des stabilisants phénoliques, préparés par un procédé selon les revendications 1 à 5.